# FASCICULE DE BREVET EUROPEEN

(11) **EP 2 764 606 B1**
(45) Date de publication et mention de la délivrance du brevet: **28.07.2021**
(21) Numéro de dépôt: 12787887.4
(22) Date de dépôt: 04.10.2012
(51) Int. Cl.: H02K 1/32

(54) **ROTOR COMPORTANT DES REGIONS INTERPOLAIRES A CANAUX DE REFROIDISSEMENT**
ROTOR MIT INTERPOLAREN REGIONEN MIT KÜHLKANÄLEN
ROTOR COMPRISING INTERPOLAR REGIONS WITH COOLING CHANNELS

(30) Priorité: 06.10.2011 FR 1159043
(43) Date de publication de la demande: 13.08.2014
(73) Titulaire: Moteurs Leroy-Somer, 16000 Angoulême (FR)
(72) Inventeur: DUTAU, Alexis, F-16000 Angoulême (FR)
(74) Mandataire: Nony
(86) Numéro de dépôt international: PCT/IB2012/055328
(87) Numéro de publication internationale: WO 2013/050957

(56) Documents cités:
- EP-A1- 0 881 757
- FR-A1- 2 940 867
- GB-A- 2 425 662
- GB-A- 2 432 728
- JP-A- 2001 339 883

## Description

La présente invention a pour objet un rotor pour machine électrique tournante, et une machine comportant un tel rotor.

La présente invention s'applique plus particulièrement mais non exclusivement au refroidissement du rotor des machines électriques tournantes ouvertes, monophasées ou polyphasées, ayant une vitesse de rotation comprise par exemple entre 0 et 10000 tours par minute, et une puissance par exemple comprise entre 0,1 et 25 MW.

On désigne par « machine électrique tournante ouverte » une machine refroidie par une circulation d'air prélevé à l'extérieur de la machine.

La demande JP 2001 339883 décrit une machine électrique comportant des pôles saillants dentelés.

Pour assurer le refroidissement d'un rotor, il est connu d'aménager des canaux de refroidissement dans le rotor.

La demande EP 0 881 747 décrit une machine synchrone à pôle lisse, dont chaque pôle comporte un aimant permanent et des enroulements d'excitation disposés dans des encoches de part et d'autre de l'aimant. Des canaux de refroidissement sont associés à chaque encoche et sont adjacents au fond de celle-ci.

Il est notamment connu de réaliser un canal à proximité du fond de l'espace interpolaire.

Le document GB 2 425 662 enseigne de réaliser une cavité dans la tôle au fond des espaces interpolaires.

En outre, le brevet US 7 598 635 enseigne de réaliser des tôles dans lesquelles un canal est ménagé à proximité du fond de l'espace interpolaire, ce canal permettant le passage d'un fluide réfrigérant pour le refroidissement du rotor.

La demande FR 2 940 867 décrit un rotor à pôles saillants présentant, à proximité de chaque épanouissement polaire, une entretoise de section transversale creuse définissant partiellement un canal de refroidissement au travers duquel un fluide de refroidissement peut circuler.

Il existe un besoin pour améliorer encore le refroidissement d'un rotor de machine électrique tournante.

L'invention vise à répondre à ce besoin et elle y parvient, selon l'un de ses aspects, grâce à un rotor pour machine électrique tournante, selon la revendication 1. Les modes de réalisation préférés sont définis dans les revendications dépendantes.

L'invention permet d'améliorer les performances thermiques de la machine et de diminuer les échauffements des bobinages rotoriques pour un volume de cuivre donné.

La présence de plusieurs canaux internes permet d'accroître la surface d'échange thermique et d'améliorer significativement les coefficients d'échange thermique.

Par « canal interne » on désigne un canal de contour fermé.

L'invention permet également une diminution de la température maximale des conducteurs électriques et des isolants pour un volume de cuivre donné, ce qui accroit la fiabilité, et une diminution du coût global de la machine, grâce à la diminution de la quantité de matière active à états thermiques identiques par rapport à une machine connue.

Dans la suite, le fluide de refroidissement est de préférence l'air, mais l'invention n'est pas limitée à l'air comme fluide de refroidissement.

Le rotor permet une circulation du fluide de refroidissement le long des canaux.

Selon le refroidissement désiré du rotor, chaque région interpolaire est parcourue par un nombre plus ou moins grand de canaux de refroidissement internes, entre 3 et 15 canaux.

Les différents canaux de refroidissement peuvent être définis entre des cloisons ménagées dans chaque région interpolaire.

Les cloisons peuvent s'étendre sur tout ou partie de la longueur du rotor. En particulier, les cloisons peuvent être interrompues et la région interpolaire présente alors une forme dentelée. Les échanges convectifs sont accrus du fait de l'augmentation du coefficient d'échange thermique moyen. Cette forme dentelée peut être astucieusement obtenue en empilant des tôles identiques selon des paquets disposés en quinconce, en alternant les faces recto et verso des paquets.

Les cloisons peuvent être disposées de diverses façons au sein des régions interpolaires.

Les canaux de refroidissement peuvent parcourir toute la longueur du rotor. Les canaux de refroidissement peuvent parcourir de façon continue ou non le rotor selon l'axe longitudinal de ce dernier.

Lorsque les canaux de refroidissement sont discontinus, les régions interpolaires présentent une forme dentelée définissant des dents. Les canaux de refroidissement sont alors ménagés dans ces dents. Une telle configuration permet au fluide de refroidissement de subir une alternance de passages à l'intérieur des canaux et de passages dans des zones élargies s'étendant axialement entre les canaux. Cela permet de générer une certaine turbulence favorable aux échanges convectifs. De plus, le fluide de refroidissement peut circuler transversalement entre les dents.

Chaque région interpolaire peut présenter une section ajourée, due aux canaux de refroidissement la parcourant, représentant plus de 25 % de sa section totale.

Les pôles saillants comportent chacun un corps de pôle et deux épanouissements polaires (encore appelés « cornes polaires » ou « pole shoes »).

Au moins un canal de refroidissement peut être ménagé dans les épanouissements polaires des pôles saillants, afin d'améliorer encore le refroidissement du rotor. On peut ainsi pour chaque pôle obtenir une circulation du fluide de refroidissement au sein des régions interpolaires, et une circulation au sein des épanouissements polaires.

Chaque tôle magnétique peut être monobloc. Toutes les tôles du rotor peuvent être identiques, chaque tôle ayant des pôles saillants ne présentant qu'un seul épanouissement polaire, tous les épanouissements étant dirigés dans le même sens circonférentiel. Lors de l'assemblage du rotor, les tôles sont assemblées par paquets.

Le rotor peut comporter des tirants de compression axiale de l'assemblage de tôles magnétiques.

Le rotor peut comporter, à l'extrémité radialement extérieure des corps de pôle, des logements pour recevoir des amortisseurs.

Le rotor peut comporter des flasques d'extrémité, afin de faciliter l'opération de bobinage et d'améliorer la tenue mécanique générale du rotor.

L'invention a encore pour objet, selon un autre de ses aspects, une machine électrique tournante comportant un rotor tel que défini ci-dessus.

La machine électrique tournante comporte un stator à l'intérieur duquel tourne le rotor.

La machine peut comporter un ou plusieurs ventilateurs, entrainés ou non par le rotor pour créer une circulation d'air forcée dans les différents canaux de refroidissement.

L'invention pourra être mieux comprise à la lecture de la description qui va suivre, d'exemples non limitatifs de mise en œuvre de celle-ci, et à l'examen du dessin annexé, sur lequel :
- la figure 1 est une perspective, schématique et partielle, d'un exemple de paquet de tôles magnétiques de rotor selon l'invention,
- la figure 2 est une vue de face selon II de la figure 1,
- la figure 3 est une vue analogue à la figure 1 d'un autre exemple de paquet de tôles magnétiques de rotor selon l'invention, et
- la figure 4 représente isolément et partiellement un pôle saillant et une région interpolaire selon un exemple de mise en œuvre de l'invention.

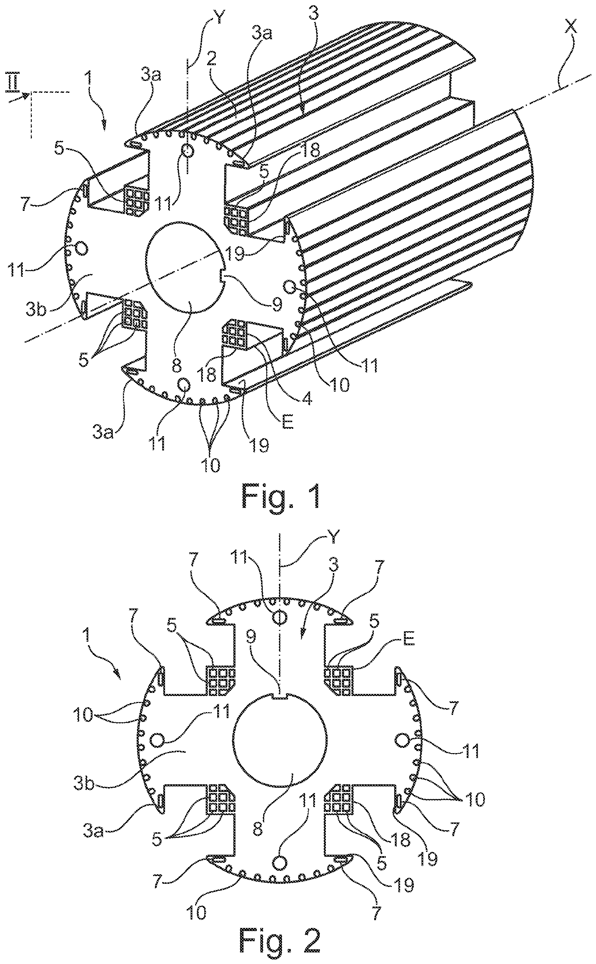

On a représenté à la figure 1 un premier exemple de masse magnétique de rotor 1 qui s'étend selon un axe longitudinal X et comporte un assemblage de tôles magnétiques 2 formant des pôles saillants 3, au nombre de quatre dans l'exemple illustré, l'invention n'étant toutefois pas limitée à une polarité particulière.

Comme on peut le voir sur la figure 1, chaque pôle 3 comporte un corps de pôle 3b, qui s'étend selon un axe médian Y, et deux épanouissements polaires 3a qui font saillie dans la direction circonférentielle.

Deux pôles voisins 3 définissent entre eux une région interpolaire E.

Des conducteurs électriques sont bobinés autour de chaque pôle 3 et définissent des enroulements, non représentés.

Chaque tôle est de préférence monobloc, étant découpée dans un même feuillard magnétique.

Le rotor 1 peut comporter des tirants, non représentés, de maintien de l'assemblage de tôles magnétiques 2, traversant la masse rotorique à la faveur des lumières 11 situées sur les pôles 3.

Un logement central 8, muni d'un moyen d'antirotation 9, est ménagé dans le paquet pour recevoir un arbre, non représenté.

La masse magnétique du rotor 1 peut également comporter, comme illustré, des logements 10 pour recevoir des amortisseurs non représentés.

Conformément à l'invention, au moins trois canaux internes de refroidissement 5 parcourent axialement chaque région interpolaire E, par exemple sept canaux, comme illustré aux figures 1 et 2.

Des cloisons 4 disposées dans les régions interpolaires E séparent les différents canaux de refroidissement 5.

Les canaux de refroidissement 5 sont par exemple réalisés dans une extension 18 en forme d'angle droit, à côtés parallèles aux faces 19 en regard des épanouissements polaires 3a.

Dans l'exemple des figures 1 et 2, les canaux de refroidissement 5 parcourent toute la longueur L du rotor 1, de façon continue, sans interruption.

La masse magnétique peut être formée par l'empilage de tôles magnétiques identiques, un canal additionnel 7 de refroidissement pouvant être formé par découpe de la tôle au sein des épanouissements polaires 3a. Plusieurs canaux additionnels 7 peuvent être ménagés au sein des épanouissements polaires 3a.

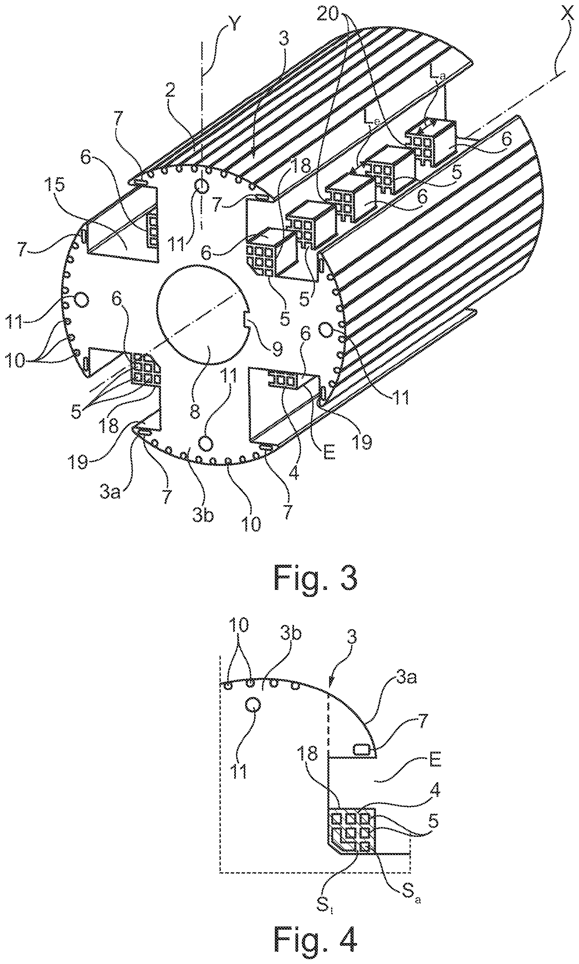

Dans la variante illustrée à la figure 3, les régions interpolaires E présentent chacune une forme dentelée définissant des dents 6, au nombre de cinq par région interpolaire E dans l'exemple décrit, l'invention n'étant toutefois pas limitée à un nombre de dents particulier.

Les canaux de refroidissement 5 sont ménagés dans les dents 6, et l'intervalle 20 entre les dents 6 définit un passage de section élargie pour le fluide de refroidissement. La dimension axiale *Lₐ* selon l'axe X d'une dent 6 est par exemple égale à la dimension *Lₑ* de l'intervalle 20 entre deux dents 6.

Les régions interpolaires E sont avantageusement dépourvues de dents à une de leurs extrémités axiales, par exemple l'extrémité 15, comme représenté à la figure 3.

Chaque région interpolaire E présente une section totale *sₜ,* représentée hachurée à la figure 4, et une section ajourée *sₐ*, définie par les canaux de refroidissement 5 parcourant la région interpolaire E. La section ajourée *sₐ* représente de préférence plus de 25 % de la section totale *sₜ* de la région interpolaire E.

Les canaux 5 peuvent présenter des sections différentes au sein d'une même région interpolaire E.

Pour obtenir la configuration illustrée à la figure 3, où les canaux interpolaires sont discontinus, on peut utiliser des tôles magnétiques identiques qui sont assemblées par paquets d'épaisseur *Lₐ* et disposés en quinconce, avec dans l'exemple à quatre pôles illustré un retournement des paquets pour faire alterner les régions avec canaux et celles sans canaux.

Le rotor 1 est par exemple intégré à une machine électrique tournante, non représentée, comportant un ventilateur centrifuge. En variante, le ventilateur est un ventilateur à canaux multiples. Dans une autre variante encore, le ventilateur est réalisé en mettant en série un ventilateur centrifuge et un ventilateur axial.

L'air aspiré par le ventilateur traverse les canaux de refroidissement 5 présents dans les régions interpolaires E situées entre deux pôles saillants 3 voisins. En outre, l'air peut circuler dans l'entrefer et au travers des canaux 7 ménagés dans les épanouissements polaires 3a des pôles saillants 3.

L'invention n'est pas limitée aux exemples qui viennent d'être décrits, et est limitée par la portée des revendications 1 à 8.

On peut par exemple combiner entre elles des caractéristiques décrites en référence à différents modes de réalisation au sein de variantes non illustrées.

Les cloisons 4 peuvent être de toute forme.

L'invention peut être mise en œuvre sur des rotors à épanouissements polaires rapportés. L'invention ne se limite pas à des pôles saillants particuliers.

L'expression « comportant un » doit être comprise comme étant synonyme de « comportant au moins un », sauf si le contraire est spécifié.

## Revendications

1. Rotor (1) pour machine électrique tournante, s'étendant selon un axe longitudinal (X), comportant :
- un assemblage de tôles magnétiques identiques (2) formant des pôles saillants (3), deux pôles saillants définissant entre eux une région interpolaire (E),
le rotor étant **caractérisé en ce qu'**il comporte de 3 à 15 canaux internes de refroidissement (5) formés dans l'assemblage de tôles magnétiques (2) dans chaque région interpolaire (E), les canaux de refroidissement (5) étant réalisés dans une extension (18) en forme d'angle droit, à côtés parallèles aux faces (19) en regard des épanouissements polaires (3a) des pôles saillants (3).

2. Rotor selon la revendication 1, les tôles magnétiques (2) étant monobloc.

3. Rotor selon l'une quelconque des revendications 1 à 3, les canaux de refroidissement (5) étant séparés au sein de chaque région interpolaire (E) par des cloisons (4).

4. Rotor selon l'une quelconque des revendications précédentes, les canaux de refroidissement (5) faisant toute la longueur de l'assemblage de tôles magnétiques du rotor (1).

5. Rotor selon l'une quelconque des revendications précédentes, les canaux de refroidissement (5) étant disposés de façon continue selon l'axe longitudinal (X) du rotor (1).

6. Rotor selon l'une quelconque des revendications 1 à 4, les régions interpolaires (E) présentant chacune, lorsque les canaux internes de refroidissement (5) sont discontinus, une forme dentelée définissant des dents (6), les canaux internes de refroidissement (5) étant ménagés dans lesdites dents (6).

7. Rotor selon l'une quelconque des revendications précédentes, chaque région interpolaire (E) présentant une section ajourée (sₐ) représentant plus de 25 % de sa section totale (sₜ).

8. Machine électrique tournante comportant un rotor (1) selon l'une quelconque des revendications précédentes.

## Patentansprüche

1. Rotor (1) für eine rotierende elektrische Maschine, welcher sich entlang einer Längsachse (X) erstreckt und umfasst:
- eine Anordnung von identischen Magnetblechen (2), die vorspringende Pole (3) bilden, wobei zwei vorspringende Pole zwischen sich einen Zwischenpolbereich (E) definieren,
wobei der Rotor **dadurch gekennzeichnet ist, dass** er 3 bis 15 innere Kühlkanäle (5) umfasst, die in der Anordnung von Magnetblechen (2) in jedem Zwischenpolbereich (E) ausgebildet sind, wobei die Kühlkanäle (5) in einer Erweiterung (18) in Form eines rechten Winkels mit Seiten, die parallel zu den gegenüberliegenden Flächen (19) der Polschuhe (3a) der vorspringenden Pole (3) sind, hergestellt sind.

2. Rotor nach Anspruch 1, wobei die Magnetbleche (2) einstückig sind.

3. Rotor nach einem der Ansprüche 1 bis 3, wobei die Kühlkanäle (5) innerhalb jedes Zwischenpolbereichs (E) durch Trennwände (4) getrennt sind.

4. Rotor nach einem der vorhergehenden Ansprüche, wobei die Kühlkanäle (5) über die gesamte Länge der Anordnung von Magnetblechen des Rotors (1) verlaufen.

5. Rotor nach einem der vorhergehenden Ansprüche, wobei die Kühlkanäle (5) durchgehend entlang der Längsachse (X) des Rotors (1) angeordnet sind.

6. Rotor nach einem der Ansprüche 1 bis 4, wobei die Zwischenpolbereiche (E) jeweils, wenn die inneren Kühlkanäle (5) nicht durchgehend sind, eine gezackte Form aufweisen, die Zähne (6) definiert, wobei die inneren Kühlkanäle (5) in den Zähnen (6) ausgebildet sind.

7. Rotor nach einem der vorhergehenden Ansprüche, wobei jeder Zwischenpolbereich (E) einen von Öffnungen gebildeten Querschnitt (sₐ) aufweist, der mehr als 25 % seines Gesamtquerschnitts (sₜ) darstellt.

8. Rotierende elektrische Maschine, welche einen Rotor (1) nach einem der vorhergehenden Ansprüche umfasst.

## Claims

1. A rotor (1) for an electrical rotating machine, extending along a longitudinal axis (X), comprising:
- an assembly of magnetic sheets (2) forming salient poles (3), two salient poles defining between them an interpolar region (E),
the rotor being **characterized in that** it comprises between 3 to 15 internal cooling channels (5) formed in the assembly of magnetic sheets (2) in each interpolar region (E), the cooling channels (5) being made in an extension (18) in the form of a right angle, with sides parallel to the faces (19) opposite the pole shoes (3a) of the salient poles (3).

2. The rotor as claimed in claim 1, the magnetic sheets (2) being identical and in one piece.

3. The rotor as claimed in any one of claims 1 to 3, the cooling channels (5) being separated within each interpolar region (E) by fins (4).

4. The rotor as claimed in any one of the preceding claims, the cooling channels (5) making the whole length of the assembly of magnetic sheets of the rotor (1).

5. The rotor as claimed in any one of the preceding claims, the cooling channels (5) being placed continuously along the longitudinal axis (X) of the rotor (1).

6. The rotor as claimed in any one of claims 1 to 4, the interpolar regions (E) each having, when the internal cooling channels (5) are discontinuous, a dentate shape defining teeth (6), the internal cooling channels (5) being arranged in said teeth (6).

7. The rotor as claimed in any one of the preceding claims, each interpolar region (E) having a cut-out section (sa) representing more than 25% of its total section (st).

8. An electrical rotating machine comprising a rotor (1) as claimed in any one of the preceding claims.
